# EUROPEAN PATENT APPLICATION

(11) **EP 2 405 068 A2**
(43) Date of publication of application: **11.01.2012**
(21) Application number: 11172714.5
(22) Date of filing: 05.07.2011
(51) Int. Cl.: E04B 7/12, A01G 9/14

(54) **Method for the assembly of a greenhouse roof, a greenhouse roof, elongated profile, and greenhouse**

(30) Priority: 05.07.2010 NL 1038084
(71) Applicant: P.L.J. Bom Holding B.V., 2671 CV Naaldwijk (NL)
(72) Inventor: van der Meer, Allard, 2692 BN 's-Gravenzande (NL)
(74) Representative: Land, Addick Adrianus Gosling

(57) **Abstract**

The present invention relates to a method for assembling a greenhouse roof with at least two panels arranged one above the other, comprising the steps of:
a) arranging a row of at least three elongate longitudinal profiles (16,18,20) running substantially parallel to each other and at increasing heights;
b) arranging panels (3) between in each case a first (16) and a second (18) of the longitudinal profiles, wherein the second longitudinal profile is situated adjacently of the first longitudinal profile;
wherein arranging of a panel comprises of
c) bringing the edge of the panel (3) into engagement with the first longitudinal profile (16), the second longitudinal profile (18) and two elongate transverse profiles (24) running transversely of the longitudinal profiles, wherein the transverse profiles are arranged with a first end thereof on the first longitudinal profile and are arranged with the second end thereof on the second longitudinal profile.

## Description

The present invention relates to a method for assembling a greenhouse roof with at least two panels arranged one above the other.

The method according to the invention comprises the steps of:
a) arranging a row of at least three elongate longitudinal profiles running substantially parallel to each other and at increasing heights;
b) arranging panels between in each case a first and a second of the longitudinal profiles, wherein the second longitudinal profile is situated adjacently of the first longitudinal profile;
   wherein arranging of a panel comprises of
c) bringing the edge of the panel into engagement with the first longitudinal profile, the second longitudinal profile and two elongate transverse profiles running transversely of the first longitudinal profile and the second longitudinal profile, wherein the transverse profiles are arranged with a first end thereof on the first longitudinal profile and are arranged with the second end thereof on the second longitudinal profile.

This method enables simple assembly of such a greenhouse roof at favourable cost. The method according to the invention is particularly favourable in the assembly of such a greenhouse roof where the panels arranged one above another differ for instance in thickness, in width or in terms of requirements for fixing thereof. It is thus possible for instance to use, as lower panels, panels which are twice as wide as the panels located thereabove.

In a favourable embodiment of the method according to the invention step c) comprises of:
- arranging a first transverse profile on the first and the second longitudinal profile;
- bringing the edge of the panel into engagement with the first longitudinal profile, the second longitudinal profile and the first transverse profile;
- arranging a second transverse profile on the first and second longitudinal profile; and
- bringing the second transverse profile into engagement with the edge of the panel.

The method preferably also comprises here the steps of:
- bringing the edge of a subsequent panel into engagement with the first longitudinal profile, the second longitudinal profile and a subsequent first transverse profile, wherein the subsequent first transverse profile is one of the preceding first transverse profile and the preceding second transverse profile;
- arranging a subsequent second transverse profile on the first and second longitudinal profile;
- bringing the subsequent second transverse profile into engagement with the edge of the subsequent panel.

These embodiments enable simple and rapid arrangement of a row of abutting panels between two mutually adjacent longitudinal profiles.

In a favourable alternative embodiment of the method according to the invention step c) comprises of:
- arranging a first transverse profile on the first and second longitudinal profile;
- arranging a second transverse profile on the first longitudinal profile and the second longitudinal profile at a distance from the first transverse profile;
- bringing the edge of the panel into engagement with the first longitudinal profile, the second longitudinal profile, the first transverse profile and the second transverse profile.

The method preferably also comprises here the steps of:
- arranging a subsequent second transverse profile on the first and second longitudinal profile at a distance from a subsequent first transverse profile, wherein the subsequent first transverse profile is one of the preceding first transverse profile and the preceding second transverse profile;
- bringing the edge of a subsequent panel into engagement with the first longitudinal profile, the second longitudinal profile, the subsequent first transverse profile and the subsequent second transverse profile.

These embodiments also enable simple and rapid arrangement of a row of abutting panels between two mutually adjacent longitudinal profiles.

In a further favourable embodiment of the method according to the invention the bringing of the edge of a panel into engagement with the first longitudinal profile, the second longitudinal profile and two transverse profiles running transversely relative to the longitudinal profiles comprises of placing the edge of the panel onto a support surface of at least one of the first longitudinal profile, the second longitudinal profile and the two transverse profiles. This embodiment makes it possible to place a panel in simple manner. In the context of the present invention a support surface does not necessarily have to be formed by a flat surface. In the context of the present invention a support surface is also understood to mean for instance a number of support points which are distributed over a surface and on which the edge of a panel can be laid and clamped.

In a favourable embodiment hereof the method also comprises of clamping the edge of the panel onto the support surface. This measure enables simple fixing of the panel.

In a further favourable embodiment the edge of the panel is placed on a support surface of each of the first longitudinal profile, the second longitudinal profile and the two transverse profiles. Particularly in combination with the embodiment wherein the edge of the panel is clamped onto the support surface, this embodiment enables simple removal and replacement of a single panel after assembly of the greenhouse roof.

In a further favourable embodiment of the method according to the invention the bringing the edge of a panel into engagement with the first longitudinal profile, the second longitudinal profile and the two transverse profiles running transversely relative to the longitudinal profiles, comprises of sliding the edge of the panel into a receiving space of at least one of the first longitudinal profile, the second longitudinal profile and the two transverse profiles. This measure enables an exceptionally simple fixation of a panel during assembly.

The invention also relates to a greenhouse roof, comprising:
- a row of at least three elongate longitudinal profiles running substantially parallel to each other and at increasing heights;
- a number of panels between in each case a first and a second of the longitudinal profiles, wherein the second longitudinal profile is situated adjacently of the first longitudinal profile;
   wherein
- the edge of each panel is in engagement with the first longitudinal profile, the second longitudinal profile and two elongate transverse profiles running transversely of the longitudinal profiles, and wherein
- the transverse profiles are arranged with a first end thereof on the first longitudinal profile and are arranged with the second end thereof on the second longitudinal profile.

In a favourable embodiment of the greenhouse roof according to the invention two abutting panels arranged between the first longitudinal profile and the second longitudinal profile share one of the transverse profiles with which the edges of the panels are in engagement.

In a further favourable embodiment of the greenhouse roof according to the invention at least one of the first transverse profile, the second transverse profile and the transverse profiles comprises a support surface on which the edge of the panel rests. In a favourable embodiment hereof the edge of the panel is clamped onto the support surface by means of a clamping member. In a further favourable embodiment each of the first transverse profile, the second transverse profile and the transverse profiles comprise a support surface on which the edge of the panel rests. Particularly in combination with the embodiment wherein the edge of the panel is clamped onto the support surface by means of a clamping member, this embodiment enables simple removal and replacement of a single panel.

In a further favourable embodiment of the greenhouse roof according to the invention at least one of the first transverse profile, the second transverse profile and the transverse profiles comprises a receiving chamber in which the edge of the panel is received.

In a further favourable embodiment of the greenhouse roof according to the invention the row of at least three elongate longitudinal profiles running substantially parallel to each other and at increasing heights comprises a gutter profile, a ridge profile and at least one intermediate profile.

In a further favourable embodiment of the greenhouse roof according to the invention the panels are at least one of glass panels and solar panels. The greenhouse roof according to the invention particularly makes possible a combination of glass panels and solar panels.

In a further favourable embodiment of the greenhouse roof according to the invention at least one of the longitudinal profiles is self-supporting, and preferably all the longitudinal profiles are self-supporting. A simple construction is possible in these embodiments, wherein no separate longitudinal beams are required to support the longitudinal profiles along the longitudinal direction thereof.

In a favourable embodiment of the greenhouse roof according to the invention at least one of the longitudinal profiles is tubular, and preferably all the longitudinal profiles are tubular. These embodiments make it possible to collect condensed water in the profile and drain it. In combination with the application of solar panels, it is even possible to cool the solar panels by allowing water or other cooling liquid to flow along the surface of the solar panels located inside the greenhouse for the purpose of cooling the panels, and to collect this water in the elongate, tubular longitudinal profile and then drain it. This can be deemed an invention in itself.

The invention also relates to an elongate longitudinal profile for forming a greenhouse roof according to the invention, adapted on a first side thereof for arranging thereon of an elongate first transverse profile running transversely of the longitudinal profile and for bringing an edge of a first panel into engagement therewith, wherein the first transverse profile and the first panel extend obliquely downward in the assembled situation, and adapted on a second side thereof for arranging of an elongate second transverse profile running transversely of the longitudinal profile and for bringing an edge of a second panel into engagement therewith, wherein the second transverse profile and the second panel extend obliquely upward in the assembled situation.

Such a longitudinal profile is particularly suitable as intermediate profile.

In a favourable embodiment of the elongate longitudinal profile according to the invention the longitudinal profile is self-supporting.

In a further favourable embodiment of the elongate longitudinal profile according to the invention the longitudinal profile is a tubular profile.

A further favourable embodiment of the elongate longitudinal profile according to the invention is provided with at least one of U-shaped receiving chambers and support surfaces for arranging at least one of the panels and the transverse profiles on the longitudinal profile.

The invention also relates to a greenhouse provided with a greenhouse roof according to the invention as described above.

The present invention will be further elucidated hereinbelow on the basis of exemplary embodiments which are shown schematically in the accompanying drawing. These are non-limitative exemplary embodiments.

In the drawing:
- Figure 1 is a schematic perspective view of a greenhouse provided with a greenhouse roof according to the invention;
- Figure 2 is a cross-sectional side view of the greenhouse according to figure 1;
- Figure 3 is a detail view of a part of the greenhouse roof as shown in figure 2;
- Figure 4 is a cross-sectional view of the gutter profile as shown in figure 3;
- Figure 5 is a cross-sectional view of the bar of figure 4;
- Figure 6 is a cross-sectional view of the intermediate profile of figure 3;
- Figure 7 is a cross-sectional view of the bar of figure 6;
- Figure 8 is a cross-sectional view of the ridge of figure 3;
- Figures 9-18 show schematically an embodiment of the method according to the invention;
- Figures 19-21 represent an alternative embodiment of a part of the method as shown in figures 9-18.

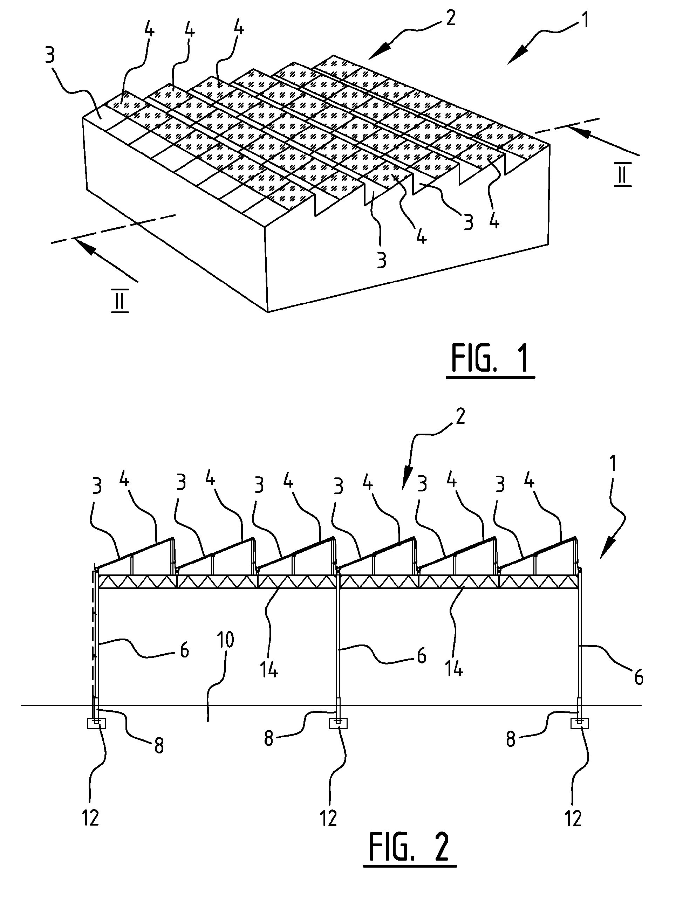

Figure 1 shows schematically a greenhouse 1 with a sawtooth-shaped greenhouse roof 2 wherein each sawtooth is provided along the sloping side thereof with in each case two panels 3 and 4 placed one above the other. Figure 2 shows a cross-section of greenhouse 1 of figure 1.

Figure 2 shows that greenhouse 1 is provided with vertically running columns 6 which are each placed in the ground 10 by means of a foundation element 8, wherein foundation element 8 is fixed in a pedestal foot 12 or concrete prop. On the side remote from the ground the uprights are mutually connected by means of trusses 14. These trusses support the sawtooth-shaped greenhouse roof 2. Shown once again here is that the sloping side of each sawtooth is provided with two panels 3 and 4 placed one above the other.

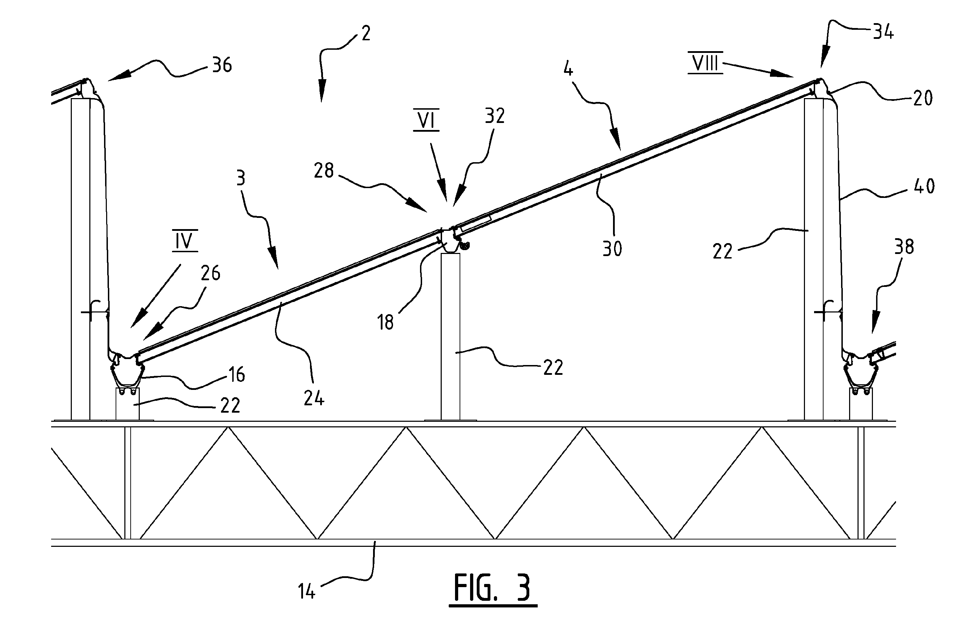

Figure 3 shows a cross-sectional detail view of a single sawtooth of figure 2. Figure 3 shows that three elongate longitudinal profiles 16, 18, 20 running substantially parallel to each other and at increasing heights are arranged on truss 14 by means of uprights 22. From left to right in the drawing the first longitudinal profile of the row is a gutter profile 16, the second longitudinal profile is an intermediate profile 18 and the third longitudinal profile in the row is a ridge profile 20. A first type of panel, in particular a glass panel 3, and more particularly a diffuse glass panel, is arranged between gutter profile 16 and the adjacent and also higher intermediate profile 18. The edge of glass panel 3 is in engagement with gutter profile 16, intermediate profile 18 and two elongate transverse profiles, also referred to as bars, 24 running transversely of gutter profile 16 and intermediate profile 18. Only one bar 24 is visible in this cross-section. Bar 24 is arranged with a first end 26 thereof on gutter profile 16 and with second end 28 on intermediate profile 18. A second type of panel, in particular a solar panel 4, also referred to as photovoltaic panel (PV panel), is arranged between intermediate profile 18 and the adjacent and higher ridge profile 20. The edge of solar panel 4 is in engagement with intermediate profile 18, ridge profile 20 and with two transverse profiles, or bars, running transversely of intermediate profile 18 and ridge profile 20. Of these bars only one bar 30 is visible in the drawing. Bars 30 are arranged with a first end 32 thereof on intermediate profile 16 and with second end 34 thereof on ridge profile 20. Visible to the left of gutter profile 16 is ridge profile 36 of a sawtooth of greenhouse roof 2 situated to the left. Shown in the drawing to the right of ridge profile 20 is gutter profile 38 of a sawtooth situated to the right. Also shown is that an insect net 40 and/or roller blind is arranged between ridge profile 20, 36 of a sawtooth and gutter profile 16, 38 of a subsequent sawtooth. Air windows in the sloping part of a sawtooth are hereby unnecessary.

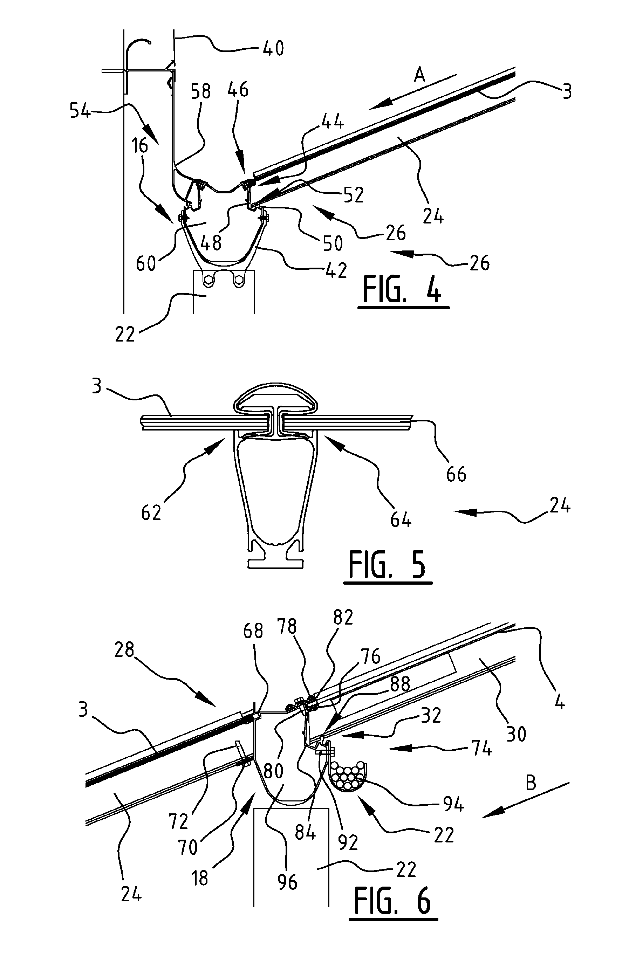

Figures 4-8 show detail cross-sections of respectively gutter profile 16, bar 24 of glass panel 3, intermediate profile 18, bar 30 of solar panel 4 and ridge profile 20.

Figure 4 shows that the gutter profile 16 of tubular cross-section is arranged on upright 22 by means of a bracket 42. Because gutter profile 16 is a tubular profile, it is self-supporting. Gutter profile 16 is provided with a support surface 44 which runs obliquely in the direction of the intermediate profile and on which the edge of glass panel 3 rests. The edge of glass panel 3 is clamped onto support surface 44 by means of a clamping strip 46. Also shown is that the first end 26 of bar 24 is hooked into a receiving space 48. Gutter profile 16 is provided for this purpose with a protruding wall part 50 and first end 26 of bar 24 is provided with a recess 52 co-acting with the protruding wall part 50. An upright water barrier profile 58 is arranged on gutter profile 16 on the side 54 of gutter profile 16 opposite side 56 on which glass panel 3 and bar 24 are arranged. Water barrier profile 58 prevents water flowing in the direction of gutter profile 16 in the direction of arrow A from being able to flow into the greenhouse before the water is drained along gutter profile 16. Condensed water which forms on the inner side of glass panel 3 and flows in the direction of gutter profile 16 can be collected in the interior space 60 of gutter profile 16 and drained. The wall of gutter profile 16 is provided for this purpose with holes (not shown). Also shown is that insect net 40 is arranged on water barrier profile 58.

Figure 5 shows a cross-section of bar 24 of glass panel 3. Shown is that bar 24 is provided with two U-shaped receiving chambers 62, 64. Glass panel 3 is received in one of the receiving chambers 62. The edge of an abutting subsequent glass panel 66 is received in the opposite receiving chamber 64 so that glass panel 3 and the abutting subsequent glass panel 66 share the bar 24.

Figure 6 shows that the intermediate profile 18 of tubular cross-section is arranged on upright 22 with a bracket (not shown). Because intermediate profile 18 is a tubular profile, it is self-supporting. Shown is that intermediate profile 18 is provided with a U-shaped receiving chamber 68 in which the edge of glass panel 3 is received. Second end 28 of bar 24 of glass panel 3 rests on a protruding wall part 70 of intermediate profile 18 extending in the direction of gutter profile 16, i.e. obliquely downward. Second end 28 of bar 24 is fastened to protruding wall part 70 by means of a screw 72. Intermediate profile 18 is further provided on the opposite side 74 with a support surface 76 which extends in the direction of ridge profile 20, i.e. obliquely upward, and on which the edge of solar panel 4 rests. The edge of solar panel 4 is clamped onto support surface 76 by means of a clamping strip 78 arranged by means of a screw 80 on intermediate profile 18. A strip 82 of a compressible material such as rubber is arranged between support surface 76 and solar panel 4 and between solar panel 4 and clamping strip 78. Just as gutter profile 16, intermediate profile 18 is provided with a receiving space 84 into which is hooked the first end 32 of bar 30 of solar panel 4. Intermediate profile 18 is also provided for this purpose with a protruding wall part 86 which co-acts with a recess 88 in first end 32 of bar 30 of solar panel 4. A cable duct 90 is also arranged on intermediate profile 18 by means of a screw 92. Cables 94 of solar panels 4 are carried through this cable duct 90. Arranged in the wall of intermediate profile 18 are holes (not shown) through which condensed water flowing in the direction of arrow B along the inner surface of solar panel 4 in the direction of intermediate gutter 18 can flow so that the condensed water can be drained through inner space 96 of intermediate profile 18 to a central water collection point.

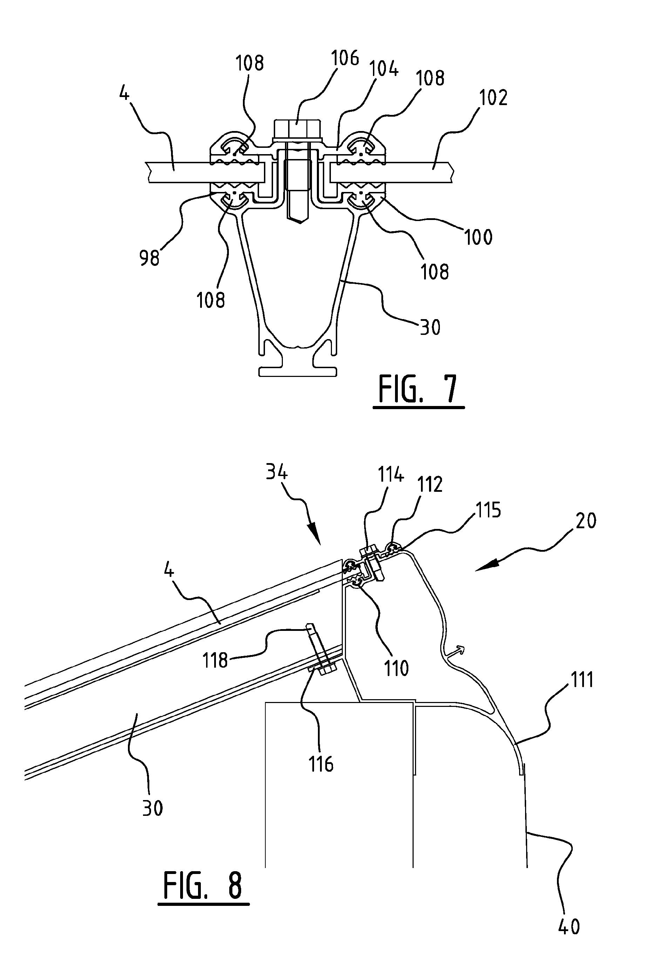

Figure 7 shows a cross-section of bar 30 of solar panel 4. Bar 30 of tubular cross-section of solar panel 4 is provided with two support surfaces 98, 100. The edge of solar panel 4 rests on first support surface 98. The edge of an abutting subsequent solar panel 102 rests on second support surface 100. The two solar panels 4, 102 are clamped onto the respective support surfaces 98, 100 by means of a clamping strip 104 which is screwed to bar 30 by means of a screw 106. A strip 108 of a compressible material such as rubber is arranged between support surfaces 98, 100 and the respective edges of solar panels 4, 102 resting thereon. A strip 108 of a compressible material such as rubber is also arranged between clamping strip 104 and the respective edges of solar panels 4, 102.

Figure 8 shows that ridge profile 20 of tubular cross-section is arranged on upright 22. Because ridge profile 20 is a tubular profile, it is self-supporting. Ridge profile 20 is provided with a support surface 110 which extends in the direction of intermediate profile 18 and on which the edge of solar panel 4 rests. The edge of solar panel 4 is also clamped onto support surface 110 by means of a clamping strip 112, which is arranged on ridge profile 20 by means of a screw 114. A strip 115 of a compressible material such as rubber is arranged between support surface 110 and the edge of solar panel 4 and between the edge of solar panel 4 and clamping strip 112. Ridge profile 20 is also provided with a protruding wall part 116 extending in the direction of intermediate profile 18. The second end 34 of bar 30 of solar panel 4 rests on this wall part 116. Second end 34 of bar 30 is also fastened to this wall part 116 by means of a screw 118. Ridge profile 20 is also provided with a protruding wall part 111 to which the insect net is attached.

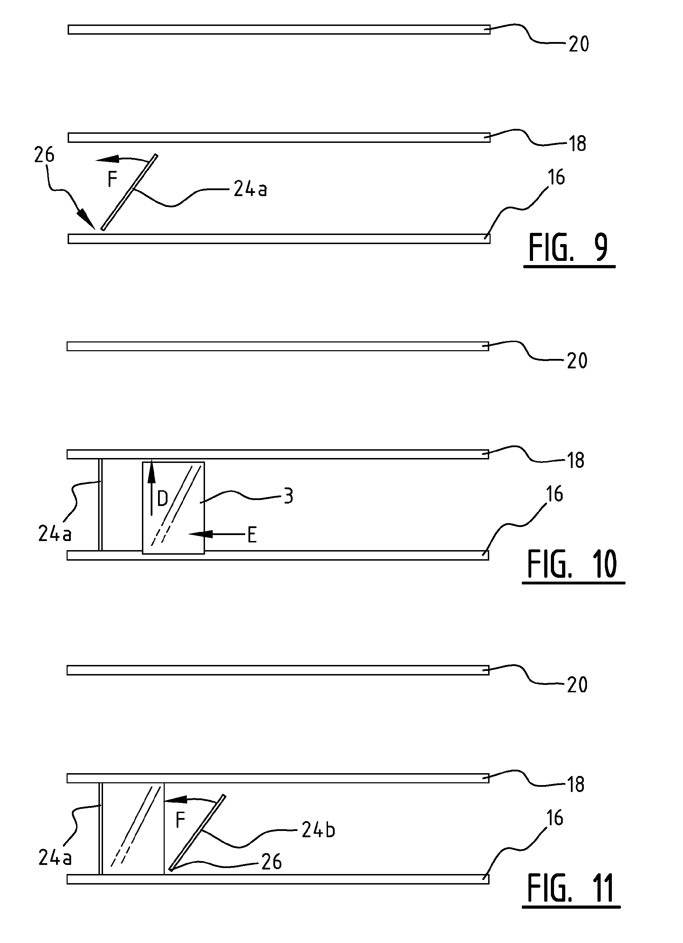

Figures 9-18 show an embodiment of the method for assembling a greenhouse roof as shown in the foregoing figures.

Figure 9 shows that a row is arranged of three elongate longitudinal profiles 16, 18, 20 running substantially parallel to each other and at increasing heights. The longitudinal profiles are gutter profile 16, intermediate profile 18 and ridge profile 20 as shown in the foregoing figures. Figure 9 shows that a first transverse profile, or first bar 24a, is arranged with a first end 26 thereof on gutter profile 16. First end 26 of first bar 24a is arranged here in receiving space 48 of gutter profile 16 of figure 4, wherein the protruding wall part 50 as shown in figure 4 is brought into engagement with the recess 52 which co-acts therewith in first end 26 of first bar 24a. First bar 24a is then moved in the direction of arrow C into an orientation transversely of gutter profile 16 and intermediate profile 18 so that second end 28 of first bar 24a can be arranged on intermediate profile 16 by being laid on the protruding wall part 70 of the intermediate profile shown in figure 6 and being screwed fixedly thereto.

Figure 10 shows that the edge of glass panel 3 is then brought into engagement with intermediate profile 18, gutter profile 16 and first bar 24a by first sliding glass panel 3 in the direction of arrow D into the U-shaped receiving chamber 68 of intermediate gutter 18 as shown in figure 6 and then sliding glass panel 3 in the direction of arrow E so that the edge of glass panel 3 is pushed into the U-shaped receiving chamber 62 of first bar 24a as shown in figure 5. The edge of glass panel 3 is here also placed on the support surface 44 of gutter profile 16 as shown in figure 4.

Figure 11 shows that a second bar 24b is then arranged with a first end 26 thereof on gutter profile 16. First end 26 of second bar 24b is arranged here in receiving space 48 of gutter profile 16 of figure 4, wherein the protruding wall part 50 as shown in figure 4 is brought into engagement with the recess 52 co-acting therewith in first end 26 of second bar 24b. Second bar 24b is then moved in the direction of arrow F into an orientation transversely of gutter profile 16 and intermediate profile 18, wherein the edge of glass panel 3 is pushed into the U-shaped receiving chamber 62 of second bar 24b as shown in figure 5. Second end 26 of second bar 24b is placed here on the support surface 70 of intermediate gutter 16 shown in figure 6 and screwed fixedly thereto.

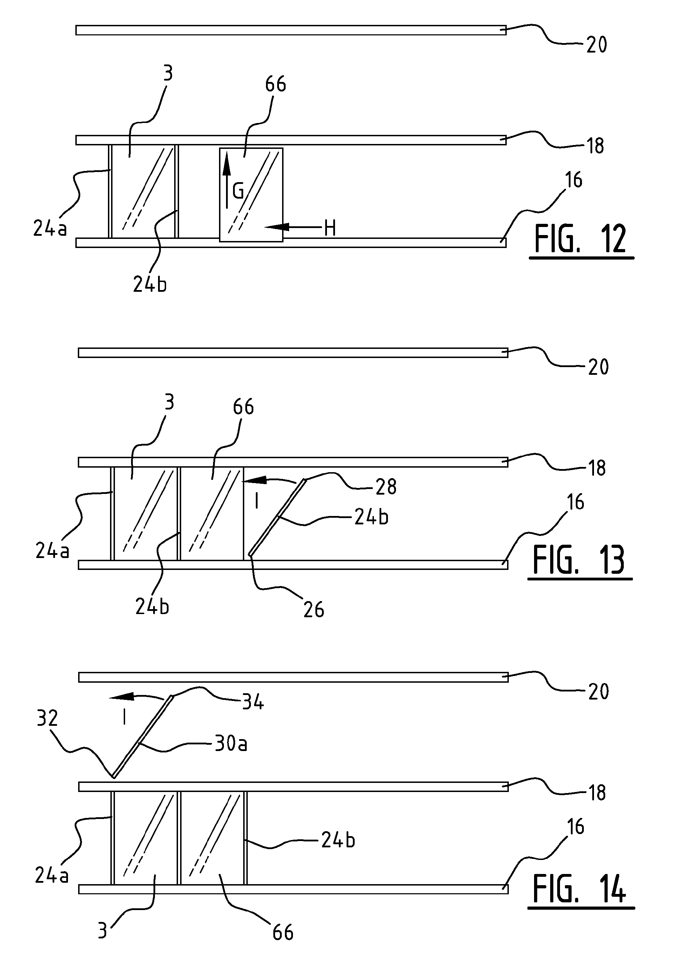

Figure 12 shows that a subsequent glass panel 66 is brought into engagement with gutter profile 16, intermediate profile 18 and second bar 24b of the preceding glass panel 3 by first sliding the subsequent panel 66 in the direction of arrow G into the U-shaped receiving chamber 68 of intermediate gutter 16 as shown in figure 6 and then sliding the subsequent glass panel 66 in the direction of arrow H so that the edge of glass panel 3 is pushed into the U-shaped receiving chamber 64 of second bar 24b of the preceding glass panel 3 as shown in figure 5. The edge of the subsequent glass panel 3 is also placed here on the support surface 44 of gutter profile 16 shown in figure 4.

As shown in figure 13, a first end 26 of a subsequent second bar 24b is then arranged on gutter profile 16. First end 26 of the subsequent second bar 24b is arranged here in receiving space 48 of gutter profile 16 of figure 4, wherein the protruding wall part 50 as shown in figure 4 is brought into engagement with recess 52 co-acting therewith in first end 26 of the subsequent bar 24b. The subsequent second bar 24b is then moved in the direction of arrow I into an orientation transversely of gutter profile 16 and intermediate profile 18, wherein the edge of the subsequent glass panel 66 is pushed into the U-shaped receiving chamber 62 of the subsequent second bar 24b shown in figure 5. Second end 28 of the subsequent second bar 24b is placed here on the support surface 70 of intermediate profile 18 shown in figure 6 and screwed fixedly thereto. A plurality of subsequent panels 66 can thus be arranged by repeating the steps as shown in figures 12 and 13.

Figures 14-18 show how solar panels 4 can then be arranged.

Figure 14 shows that a first transverse profile, or bar 30a, is arranged with a first end 32 thereof on intermediate profile 18. First end 32 of first bar 30a is arranged here in receiving space 84 of intermediate profile 18 of figure 6, wherein the protruding wall part 86 as shown in figure 6 is brought into engagement with the recess 88 co-acting therewith in first end 32 of first bar 30a. First bar 30a is then moved in the direction of arrow J into an orientation transversely of intermediate profile 18 and ridge profile 20 so that second end 34 of first bar 30 can be arranged on ridge profile 20 by being laid on the protruding wall 116 of ridge profile 20 shown in figure 8.

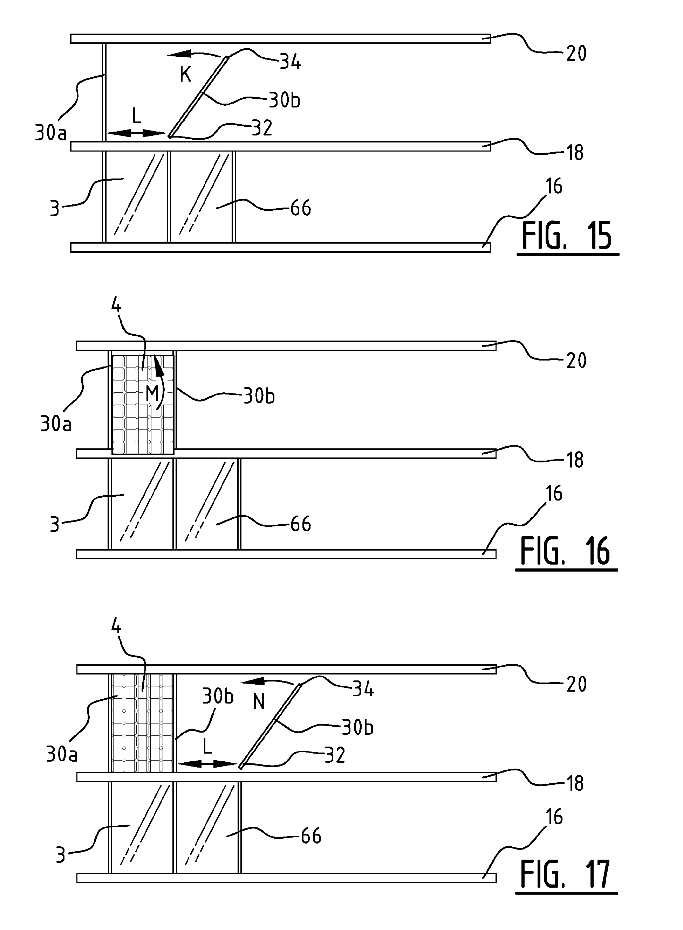

Figure 15 shows that a first end 32 of a second bar 30b is then arranged on intermediate profile 18 at a distance L from first bar 30a. First end 32 of second bar 30b is arranged here in receiving space 84 of intermediate profile 18 of figure 6, wherein the protruding wall part 86 as shown in figure 6 is brought into engagement with the recess 88 co-acting therewith in first end 32 of second bar 30b. Second bar 30b is then moved in the direction of arrow K into an orientation transversely of intermediate profile 18 and ridge profile 20 so that second end 34 of second bar 30b can be arranged on ridge profile 20 by being laid on the protruding wall 116 of ridge profile 20 shown in figure 8 and being screwed fixedly thereto.

Figure 16 shows that a solar panel 4 can then be placed as according to arrow M on respective support surfaces 76, 110, 98 of intermediate profile 18 (see figure 6), ridge profile 20 (see figure 8) and the first and second bars 30a, 30b (see figure 7). The edge of solar panel 4 can then be clamped onto support surfaces 76, 110, 98 by arranging the covering strips 78, 104, 112 as shown in figures 6, 7 and 8.

Figure 17 shows that a first end 32 of a subsequent second bar 30b is then arranged on intermediate profile 18 at a distance L from second bar 30b of the preceding solar panel 4. First end 32 of the subsequent second bar 30b is then arranged in receiving space 84 of intermediate profile 18 of figure 6, wherein the protruding wall part 86 as shown in figure 6 is brought into engagement with the recess 88 co-acting therewith in first end 32 of the subsequent second bar 30b. The subsequent second bar 30b is then moved in the direction of arrow N into an orientation transversely of intermediate profile 18 and ridge profile 20 so that second end 34 of the subsequent second bar 30b can be arranged on ridge profile 20 by being laid on the protruding wall 116 of ridge profile 20 shown in figure 8 and screwed fixedly thereto.

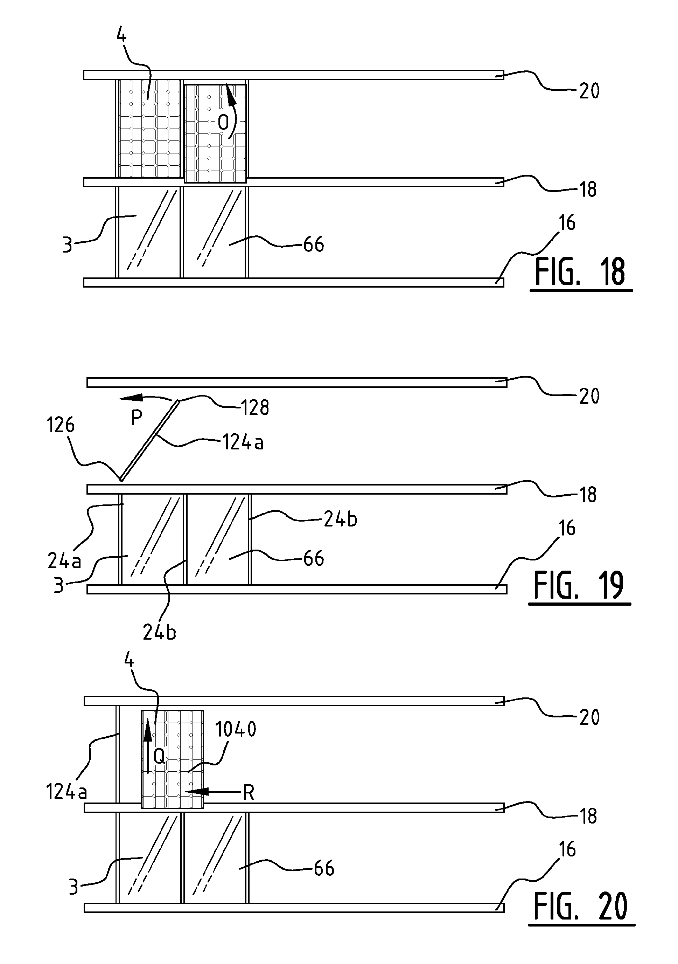

Figure 18 shows that a subsequent solar panel 102 can be placed as according to arrow O on the respective support surfaces 76, 110, 100 of intermediate profile 18 (see figure 6), ridge profile 20 (see figure 8) and the first and second bars 30a, 30b (see figure 7). The edge of the subsequent solar panel 102 can then be clamped onto support surfaces 76, 110, 100 by arranging the clamping strips 78, 104, 112 shown in figures 6, 7 and 8.

It is also possible to first arrange a plurality of second bars 30b and then a plurality of subsequent solar panels 102.

Figures 19 and 20 show an alternative method for arranging panels between the intermediate profile and the ridge profile.

Figure 19 shows that a first transverse profile, or bar 124a, is arranged with a first end 126 thereof on intermediate profile 18. First end 126 of first bar 124a is arranged here in receiving space 84 of intermediate profile 18 of figure 6, wherein the protruding wall part 86 as shown in figure 6 is brought into engagement with the recess 88 co-acting therewith in first end 132 of first bar 124a. First bar 124a is then moved in the direction of arrow P into an orientation transversely of intermediate profile 18 and ridge profile 20 so that second end 128 of first bar 124a can be arranged on ridge profile 20 by being laid on the protruding wall 116 of ridge profile 20 shown in figure 8.

Figure 20 shows that the edge of a panel 1040 is then brought into engagement with intermediate profile 18, ridge profile 20 and first bar 124a by first sliding panel 104 in the direction of arrow Q into a U-shaped receiving chamber of ridge profile 20. This U-shaped receiving chamber of ridge profile 20 is not shown in figure 8 and in this embodiment is arranged instead of support surface 110. Panel 1040 is then pushed in the direction of arrow R so that the edge of panel 1040 is pushed into the U-shaped receiving chamber 62 of first bar 124a shown in figure 5. The edge of panel 1040 is here also placed on the support surface 76 of intermediate profile 18 shown in figure 6.

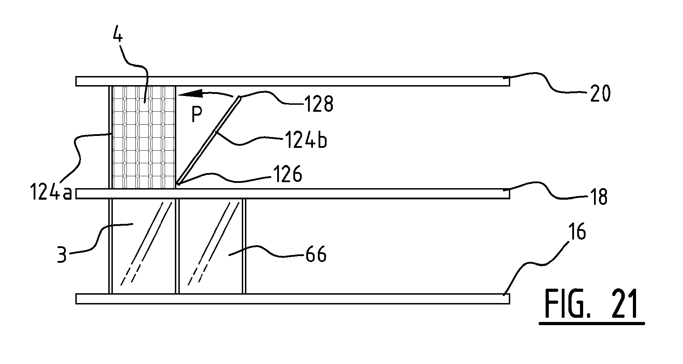

Figure 21 shows that a second bar 124b is then arranged with a first end 126 thereof on intermediate profile 18. First end 126 of second bar 124b is arranged here in receiving space 84 of intermediate profile 18 of figure 6, wherein the protruding wall part 86 as shown in figure 6 is brought into engagement with the recess 88 co-acting therewith in first end 126 of second bar 124b. Second bar 124b is then moved in the direction of arrow S into an orientation transversely of intermediate profile 18 and ridge profile 20, wherein the edge of panel 1040 is pushed into the U-shaped receiving chamber 62 of second bar 124b shown in figure 5. Second end 128 of second bar 124b is placed here on the support surface 116 of ridge profile 20 shown in figure 8 and screwed fixedly thereto. A number of subsequent panels can then be arranged in similar manner as shown in figures 12 and 13.

The figures show a greenhouse roof with a sawtooth shape. The method, the greenhouse roof and the greenhouse also relate to other shapes such as a gable roof shape with two sloping surfaces, both symmetrical and asymmetrical. At least one of the two sloping surfaces is then provided in each case with at least two panels arranged one above the other.

The figures show that two rows of panels are placed one above the other. More than two rows of panels can however be placed one above the other, wherein more than one intermediate profile is then also arranged between the gutter profile and the ridge profile.

In the figures the lower panel is a glass panel and the upper panel is a solar panel. The lower and/or the upper panel can also be one type of panel of for instance a polycarbonate panel, a sandwich panel, a plexiglass panel, a single or double-glass panel etc. It is also possible for the lower panel and the upper panel to be of the same type.

In the figures the vertically running part of the sawtooth is provided with an insect net, but it is also possible for the vertically running part to be provided with a closed outside wall or for instance an outside wall provided with a number of air windows. The vertically running part can also be sloping.

In the figures the second end of the transverse profiles, or bars, is connected to the respective longitudinal profiles by means of a screw. It is also possible for the ends of the bars to be connected by means of a clamping connection.

In the figures the first end of the transverse profiles, or bars, is connected to the respective longitudinal profiles by means of a hook connection. Although such a connection is recommended because of convenience of assembly, other methods of connection are also possible, such as a clamping connection or a screw connection.

In the figures the trusses of the greenhouse are oriented horizontally and the respective longitudinal profiles are set at different heights by means of uprights of different length between the trusses and the longitudinal profiles. It is however also possible for the trusses to be sloping, and to then for instance run substantially parallel to the panels.

In the figures the clamping members take the form of clamping strips arranged along the length of the longitudinal profiles and transverse profiles. The clamping members can also take a different form, for instance as clamps which only engage on the edge of the panels at determined positions.

It is possible for the clamping members to be arranged on the longitudinal profiles and the transverse profiles after the panels have been arranged. It is also possible for the clamping members to be already connected to the longitudinal profiles and transverse profiles before the panels are arranged, wherein the clamping members are positioned at a first distance from the support surfaces when the panels are arranged so that the edges of the panels can be inserted between the support surfaces and the clamping members, and wherein the clamping members can then be placed at a second distance from the support surfaces in order to fixedly clamp the edges of the panels.

In addition to or instead of the shown strips of a compressible material, strips of another material, for instance of an electrically insulating or heat-insulating material, can be arranged between the edges of the panels and the support surfaces, between the edges of the panels and the clamping members and between the edges of the panels and the U-shaped receiving chambers.

In figure 18 the panels of the upper row have the same width as the panels of the lower row and the bars of the lower row and the upper row extend mutually in line. It is however also possible for the lower panels to be wider or less wide than the upper panels. In that case the bars of the lower row cannot, or not all of them, extend in line with the bars of the upper row.

## Claims

1. Method for assembling a greenhouse roof with at least two panels arranged one above the other, comprising the steps of:
a) arranging a row of at least three elongate longitudinal profiles running substantially parallel to each other and at increasing heights;
b) arranging panels between in each case a first and a second of the longitudinal profiles, wherein the second longitudinal profile is situated adjacently of the first longitudinal profile;
wherein arranging of a panel comprises of
c) bringing the edge of the panel into engagement with the first longitudinal profile, the second longitudinal profile and two elongate transverse profiles running transversely of the first longitudinal profile and the second longitudinal profile, wherein the transverse profiles are arranged with a first end thereof on the first longitudinal profile and are arranged with the second end thereof on the second longitudinal profile.

2. Method as claimed in claim 1, wherein step c) comprises of:
- arranging a first transverse profile on the first and the second longitudinal profile;
- bringing the edge of the panel into engagement with the first longitudinal profile, the second longitudinal profile and the first transverse profile;
- arranging a second transverse profile on the first and second longitudinal profile; and
- bringing the second transverse profile into engagement with the edge of the panel.

3. Method as claimed in claim 2, also comprising of:
- bringing the edge of a subsequent panel into engagement with the first longitudinal profile, the second longitudinal profile and a subsequent first transverse profile, wherein the subsequent first transverse profile is one of the preceding first transverse profile and the preceding second transverse profile;
- arranging a subsequent second transverse profile on the first and second longitudinal profile;
- bringing the subsequent second transverse profile into engagement with the edge of the subsequent panel.

4. Method as claimed in claim 1, wherein step c) comprises of:
- arranging a first transverse profile on the first and second longitudinal profile;
- arranging a second transverse profile on the first longitudinal profile and the second longitudinal profile at a distance from the first transverse profile;
- bringing the edge of the panel into engagement with the first longitudinal profile, the second longitudinal profile, the first transverse profile and the second transverse profile.

5. Method as claimed in claim 4, also comprising of:
- arranging a subsequent second transverse profile on the first and second longitudinal profile at a distance from a subsequent first transverse profile, wherein the subsequent first transverse profile is one of the preceding first transverse profile and the preceding second transverse profile;
- bringing the edge of a subsequent panel into engagement with the first longitudinal profile, the second longitudinal profile, the subsequent first transverse profile and the subsequent second transverse profile.

6. Method as claimed in any of the foregoing claims, wherein bringing the edge of a panel into engagement with the first longitudinal profile, the second longitudinal profile and two transverse profiles running transversely relative to the longitudinal profiles comprises of placing the edge of the panel onto a support surface of at least one of the first longitudinal profile, the second longitudinal profile and the two transverse profiles.

7. Method as claimed in claim 6, also comprising of clamping the edge of the panel onto the support surface.

8. Method as claimed in claim 6 or 7, wherein the edge of the panel is placed on a support surface of each of the first longitudinal profile, the second longitudinal profile and the two transverse profiles.

9. Method as claimed in any of the claims 1-7, wherein
- bringing the edge of a panel into engagement with the first longitudinal profile, the second longitudinal profile and the two transverse profiles running transversely relative to the longitudinal profiles comprises of sliding the edge of the panel into a receiving space of at least one of the first longitudinal profile, the second longitudinal profile and the two transverse profiles.

10. Greenhouse roof, comprising:
- a row of at least three elongate longitudinal profiles running substantially parallel to each other and at increasing heights;
- a number of panels between in each case a first and a second of the longitudinal profiles, wherein the second longitudinal profile is situated adjacently of the first longitudinal profile;
wherein
- the edge of each panel is in engagement with the first longitudinal profile, the second longitudinal profile and two elongate transverse profiles running transversely of the longitudinal profiles, and wherein
- the transverse profiles are arranged with a first end thereof on the first longitudinal profile and are arranged with the second end thereof on the second longitudinal profile.

11. Greenhouse roof as claimed in claim 10, wherein
- two abutting panels arranged between the first longitudinal profile and the second longitudinal profile share one of the transverse profiles with which the edges of the panels are in engagement.

12. Greenhouse roof as claimed in claim 10 or 11, wherein the row of at least three elongate longitudinal profiles running substantially parallel to each other and at increasing heights comprises a gutter profile, a ridge profile and at least one intermediate profile.

13. Greenhouse roof as claimed in any of the claims 10-12, wherein the panels are at least one of glass panels and solar panels.

14. Greenhouse roof as claimed in any of the claims 10-13, wherein at least one of the longitudinal profiles is self-supporting, and wherein preferably all the longitudinal profiles are self-supporting.

15. Greenhouse roof as claimed in any of the claims 10-14, wherein at least one of the longitudinal profiles is tubular, and wherein preferably all the longitudinal profiles are tubular.

16. Elongate longitudinal profile for forming a greenhouse roof as claimed in any of the claims 10-15, adapted on a first side thereof for arranging thereon of an elongate first transverse profile running transversely of the longitudinal profile and for bringing an edge of a first panel into engagement therewith, wherein the first transverse profile and the first panel extend obliquely downward in the assembled situation, and adapted on a second side thereof for arranging of an elongate second transverse profile running transversely of the longitudinal profile and for bringing an edge of a second panel into engagement therewith, wherein the second transverse profile and the second panel extend obliquely upward in the assembled situation.

17. Greenhouse, provided with a greenhouse roof as claimed in any of the claims 10-15.
